(19) Europäisches Patentamt
European Patent Office
Office européen des brevets

(11) EP 4 552 808 A1

# (12) EUROPEAN PATENT APPLICATION

published in accordance with Art. 153(4) EPC

(43) Date of publication:
**14.05.2025 Bulletin 2025/20**

(21) Application number: **23851270.1**

(22) Date of filing: **28.04.2023**

(51) International Patent Classification (IPC):
***B25J 9/16*** *(2006.01)* ***B25J 15/04*** *(2006.01)*

(52) Cooperative Patent Classification (CPC):
**B25J 9/16; B25J 15/04**

(86) International application number:
**PCT/CN2023/091430**

(87) International publication number:
**WO 2024/032040 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 CN 202210962888**

(71) Applicant: **Huawei Cloud Computing Technologies Co., Ltd.**
**Guiyang, Guizhou 550025 (CN)**

(72) Inventors:
- **GU, Qipeng**
  **Guiyang, Guizhou 550025 (CN)**
- **JIN, Xin**
  **Guiyang, Guizhou 550025 (CN)**
- **ZHAO, Ximeng**
  **Guiyang, Guizhou 550025 (CN)**

(74) Representative: **Goddar, Heinz J.**
**Boehmert & Boehmert Anwaltspartnerschaft mbB**
**Pettenkoferstrasse 22**
**80336 München (DE)**

## (54) OBJECT PICKUP METHOD AND RELATED DEVICE

(57) An object pickup method is provided, and includes: obtaining point cloud data about a target object; obtaining target pickup posture information and type information of the target object that are obtained by processing the point cloud data via a neural network, where the target pickup posture information is used for describing a target pickup posture of a pickup apparatus for the target object; and controlling, based on the target pickup posture information and the type information, the pickup apparatus to pick up the target object. According to the method, objects with varying details, for example, of different types, can be adaptively picked up with reference to the neural network. An object pickup device, a computer device, and a computer-readable storage medium are further provided.

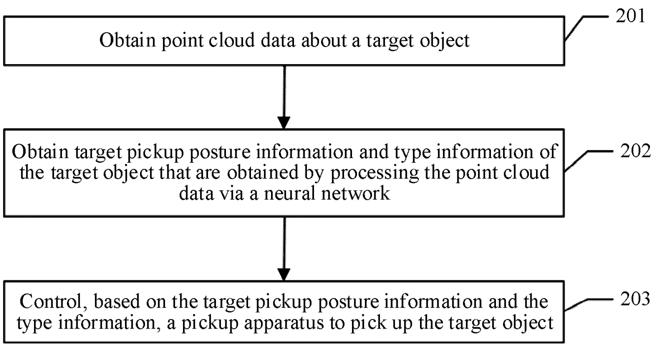


FIG. 2

EP 4 552 808 A1

## Description

This application claims priority to Chinese Patent Application No. CN202210962888.1, filed on August 11, 2022 and entitled "OBJECT PICKUP METHOD AND RELATED DEVICE", which is incorporated herein by reference in its entirety.

## TECHNICAL FIELD

This application relates to the field of automation control technologies, and specifically, to an object pickup method and a related device.

## BACKGROUND

With continuous development of automation control technologies, automatically controlled mechanical devices such as robots are widely used in fields such as cargo handling, cargo transfer, intelligent manufacturing, and smart healthcare.

An autonomous pickup technology is a basic capability of the automatically controlled mechanical devices such as the robots. However, in a scenario such as the cargo handling, objects with varying details may need to be picked up. Therefore, a method for adaptively picking up objects with varying details, for example, of different types and sizes, is urgently needed.

## SUMMARY

This application provides an object pickup method, to resolve a problem that in a scenario with a variety of object types and forms, it is difficult to pick up objects with varying details, and consequently, it is difficult to meet a requirement of an actual application scenario. This application further provides a corresponding apparatus, a device, a computer-readable storage medium, a computer program product, and the like.

A first aspect of this application provides an object pickup method. The method may include: obtaining point cloud data about a target object; obtaining target pickup posture information and type information of the target object that are obtained by processing the point cloud data via a neural network, where the target pickup posture information is used for describing a target pickup posture of a pickup apparatus for the target object; and controlling, based on the target pickup posture information and the type information, the pickup apparatus to pick up the target object.

In the first aspect, the neural network may obtain the target pickup posture information and the type information of the target object based on the point cloud data about the target object, so that for details of the target object, the target object is adaptively picked up in an appropriate pickup manner and an appropriate pickup posture, to successfully execute a pickup task.

In a possible implementation of the first aspect, the pickup apparatus includes a plurality of types of end effectors, and different types of end effectors are configured to pick up different types of objects. The foregoing step of controlling, based on the target pickup posture information and the type information, the pickup apparatus to pick up the target object includes: determining a target pickup mode of the pickup apparatus based on the type information, where the target pickup mode indicates an end effector used for picking up the target object; and controlling the pickup apparatus to pick up, in the target pickup mode, the target object based on the target pickup posture indicated by the target pickup posture information.

In the possible implementation, the plurality of types of end effectors are disposed in the pickup apparatus, so that an appropriate end effector can be selected for pickup based on a type of an object to be picked up (for example, the target object). Therefore, an appropriate pickup mode may be adaptively selected for pickup based on the type of the object to be picked up in an actual scenario. In addition, an accurate pickup posture may be further determined via the neural network. In this way, based on the actual scenario, the pickup apparatus can be adaptively controlled to pick up the target object in the appropriate pickup mode and the accurate posture, collaborative control combining software and hardware is implemented, objects with varying details can be successfully picked up, and a pickup task in a complex scenario can be adaptively completed.

In a possible implementation of the first aspect, the neural network includes a first convolutional network and a second convolutional network. The foregoing step of obtaining target pickup posture information and type information of the target object that are obtained by processing the point cloud data via a neural network includes: obtaining the target pickup posture information based on the point cloud data via the first convolutional network; and obtaining the type information of the target object based on the point cloud data via the second convolutional network.

In the possible implementation, in this embodiment of this application, both the first convolutional network and the second convolutional network may include a convolution operation, and specific manners of the convolution operations in the first convolutional network and the second convolutional network are not limited. For example, the convolution operation in the neural network may include one or more of a convolution operation on a matrix, a graph convolution operation on a graph structure, a convolution operation on the point cloud data, and the like. For different input data forms, specific manners of corresponding convolution operations may be different. For example, specific manners of the graph convolution operation on the graph structure and the convolution operation on the point cloud data may be different. For implementation, refer to a current or subsequently developed related technology.

In the possible implementation, the target pickup posture information and the type information of the target object are respectively obtained by using two branch structures (namely, the first convolutional network and the second convolutional network), to evaluate a pickup manner of the target object based on comprehensive information. In this way, for objects with varying details, appropriate manners are adaptively selected for pickup, so that requirements of a plurality of application scenarios can be met.

In a possible implementation of the first aspect, the foregoing step of obtaining the target pickup posture information based on the point cloud data via the first convolutional network includes: obtaining, from the point cloud data based on structure information of the end effector of the pickup apparatus, at least two sets of local point cloud data that match the end effector, where each set of local point cloud data corresponds to one candidate pickup posture; and obtaining the target pickup posture information based on the at least two sets of local point cloud data via the first convolutional network.

In the possible implementation, each set of local point cloud data may include information about at least one candidate pickup point, to describe a corresponding candidate pickup posture. The at least one candidate pickup point may be used for describing a candidate location for picking up the target object by using the end effector. In this case, the candidate pickup posture may be represented by using the at least one candidate pickup point. If the local point cloud data includes not only the information about the candidate pickup point, but also the structure information of the end effector, the candidate pickup posture can be described more comprehensively. In this case, the local point cloud data may not only describe a candidate pickup pose of the pickup apparatus for the target object, but also include information such as a contact region when the pickup apparatus picks up the target object. Each set of local point cloud data corresponds to one candidate pickup posture, so that the first convolutional network determines a target candidate posture based on candidate pickup postures respectively corresponding to a plurality of sets of local point cloud data, to output target candidate posture information.

In a possible implementation of the first aspect, the first convolutional network is a graph convolutional network. The foregoing step of obtaining the target pickup posture information based on the at least two sets of local point cloud data via the first convolutional network includes: obtaining a graph structure based on the at least two sets of local point cloud data, where each node in the graph structure corresponds to one piece of local point cloud data; and processing the graph structure via the first convolutional network, to obtain the target pickup posture information.

In the possible implementation, each set of local point cloud data is converted into a form of the graph structure in a graph construction manner, so that the at least two sets of local point cloud data are described by using structured data, to meet a form requirement of the graph convolutional network on input data. It can be learned that a plurality of sets of local point cloud data can be effectively integrated by using the graph structure, so that the target pickup posture information is obtained via the graph convolutional network based on a plurality of candidate pickup postures described in the graph structure.

In a possible implementation of the first aspect, the first convolutional network includes a first feature extraction network and a first classifier, and the first feature extraction network is located before the first classifier. The foregoing step of obtaining the type information of the target object based on the point cloud data via the second convolutional network includes: obtaining the type information of the target object via the second convolutional network based on the point cloud data and first feature information that is output by the first feature extraction network when the first convolutional network performs processing based on the point cloud data.

In the possible implementation, in a process of determining the target pickup posture of the pickup apparatus for the target object, the first convolutional network usually needs to extract a local feature corresponding to the target pickup posture. In other words, the first feature information output by the first feature extraction network when processing is performed based on the point cloud data in the first convolutional network may include local feature information corresponding to the target pickup posture. Based on this, in the possible implementation, a type of the target object is not only identified based on global point cloud data, but also identified with reference to the local feature information included in the first feature information.

In a possible implementation of the first aspect, the second convolutional network includes a second feature extraction network and a second classifier. The foregoing step of obtaining the type information of the target object via the second convolutional network based on the point cloud data and first feature information that is output by the first feature extraction network when the first convolutional network performs processing based on the point cloud data includes: processing the point cloud data via the second feature extraction network, to obtain second feature information; aggregating the first feature information and the second feature information, to obtain an aggregation result; and processing the aggregation result by using the second classifier, to obtain the type information of the target object.

In the possible implementation, the second feature information usually includes global feature information of the target object in the point cloud data. The first feature information may be feature information obtained based on a plurality of sets of local point cloud data. In this case, the first feature information usually includes local feature information of the target object in the point cloud data. It can be learned that, in the possible implementation, the second classifier may aggregate the local feature information and the global feature information of the target object to determine a type of the target object, to accurately classify the target object with reference to complete information.

A second aspect of this application provides an object pickup apparatus, used in a computer device, and the apparatus has a function of implementing the method in any one of the first aspect or the possible implementations of the first aspect. The function may be implemented by hardware, or may be implemented by hardware executing corresponding software. The hardware or the software includes one or more modules corresponding to the foregoing function, for example, an obtaining module, a processing module, and a control module.

A third aspect of this application provides a computer device. The computer device includes at least one processor, a memory, and computer-executable instructions that are stored in the memory and that can be run on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, the processor performs the method according to any one of the first aspect or the possible implementations of the first aspect.

A fifth aspect of this application provides a computer program product storing one or more computer-executable instructions. When the computer-executable instructions are executed by a processor, the processor performs the method according to any one of the first aspect or the possible implementations of the first aspect.

A sixth aspect of this application provides a chip system. The chip system includes a processor, configured to support a terminal in implementing a function in any one of the first aspect or the possible implementations of the first aspect. In a possible design, the chip system may further include a memory. The memory is configured to store program instructions and data that are necessary for a computer device. The chip system may include a chip, or may include a chip and another discrete component.

For technical effects brought by any one of the second aspect to the sixth aspect or the possible implementations of the second aspect to the sixth aspect, refer to the technical effects brought by the first aspect or the related possible implementations of the first aspect. Details are not described herein again.

## BRIEF DESCRIPTION OF DRAWINGS

FIG. 1 is a diagram of an artificial intelligence main framework according to an embodiment of this application;
FIG. 2 is an example diagram of an object pickup method according to an embodiment of this application;
FIG. 3 is an example diagram of a control procedure according to an embodiment of this application;
FIG. 4a is an example diagram of an equivalent shape corresponding to a two-finger robot gripper according to an embodiment of this application;
FIG. 4b is an example diagram of obtaining local point cloud data according to an embodiment of this application;
FIG. 5 is an example diagram of obtaining a target pickup posture of a target object according to an embodiment of this application;
FIG. 6 is an example diagram of a neural network according to an embodiment of this application;
FIG. 7 is a diagram of an embodiment of an object pickup apparatus according to an embodiment of this application; and
FIG. 8 is a diagram of a structure of a computer device according to an embodiment of this application.

## DESCRIPTION OF EMBODIMENTS

The following describes embodiments of this application with reference to the accompanying drawings in embodiments of this application. Terms used in implementations of this application are only used to explain specific embodiments of this application, but are not intended to limit this application.

A person of ordinary skill in the art may learn that, with development of technologies and emergence of a new scenario, technical solutions provided in embodiments of this application are also applicable to a similar technical problem.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following" or a similar expression thereof means any combination of these items, including any combination of a single item or a plurality of items. In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

As described in the background, in fields such as cargo handling, cargo transfer, intelligent manufacturing, and smart healthcare, an automatically controlled mechanical device such as a robot usually needs to be used to complete an autonomous pickup task of an object.

Picking up includes grasping, suction, or the like. When different end effectors are used, manners of moving the object may be different.

In an example, the end effector may be a robotic arm. In this case, the object may be grasped by using the robotic arm. In another example, the end effector may be a suction cup. In this case, the object may be sucked by using the suction cup. Certainly, the end effector may alternatively have another structure form. This is not limited in embodiments of this application. In still another example, the end effector is a magnetic suction end effector. In this case, the object may be sucked in a magnetic suction manner.

However, currently, a mechanical device is usually fixedly configured to pick up one type of object, and is not applicable to picking up different objects of a variety of types and forms.

It can be learned that currently, in a scenario with a variety of object types and forms, it is difficult to adaptively pick up objects with varying details, and consequently, it is difficult to meet a requirement of an actual application scenario.

Based on the foregoing problems, embodiments of this application provide an object pickup method, to adaptively pick up objects with varying details, for example, of different types, with reference to a neural network.

Because this application relates to artificial intelligence, the following first describes the artificial intelligence.

The artificial intelligence (Artificial Intelligence, AI) refers to a theory, method, technology, and application system that are used to simulate, extend, and expand human intelligence by using a digital computer or a machine controlled by the digital computer, to perceive an environment, obtain knowledge, and obtain an optimal result by using the knowledge. In other words, the artificial intelligence is a branch in computer science, and aims to understand the essence of intelligence and produce a new intelligent machine that can react in a manner similar to human intelligence. The artificial intelligence is to study design principles and implementation methods of various intelligent machines, so that the machines have perception, inference, and decision-making functions. Research in the field of the artificial intelligence includes robotics, natural language processing, computer vision, decision-making and inference, human-machine interaction, recommendation and search, AI basic theories, and the like.

For ease of understanding, the following first describes related terms and related concepts such as the neural network in embodiments of this application.

FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by the artificial intelligence to the information technology industry from an underlying infrastructure and information (technology providing and processing implementation) of the artificial intelligence to an industrial ecological process of a system.

(1) Infrastructure

The infrastructure provides computing capability support for an artificial intelligence system, implements communication with the external world, and implements support by using a basic platform. The communication with the outside is implemented by using a sensor. A computing capability is provided by an intelligent chip (a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), a field programmable gate array (field programmable gate array, FPGA), or a tensor processing unit (tensor processing unit, TPU)). The basic platform includes related platform assurance and support such as a distributed computing framework and a network, and may include cloud storage and computing, an interconnection and interworking network, and the like. For example, the sensor communicates with the outside to obtain data, and the data is provided, for computing, for a smart chip in a distributed computing system provided by the basic platform.

(2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

(3) Data processing

The data processing usually includes data training, machine learning, deep learning, searching, inference, decision-making, and the like.

The machine learning and the deep learning may mean performing symbolic and formal intelligent information modeling, extraction, preprocessing, training, and the like on data.

The inference is a process in which human intelligent inference is simulated in a computer or an intelligent system, and machine thinking and problem resolving are performed by using formal information according to an inference control policy. A typical function is searching and matching.

The decision-making is a process of making a decision after intelligent information is inferred, and usually provides functions such as classification, ranking, and prediction.

(4) General capability

After the data processing mentioned above is performed on the data, some general capabilities may further be formed based on a data processing result. For example, the general capability may be an algorithm or a general system, for example, translation, text analysis, computer vision processing, speech recognition, or image recognition.

(5) Intelligent product and industry application

The intelligent product and industry application are products and applications of the artificial intelligence system in various fields, and encapsulate overall solutions of the artificial intelligence, so that decision-making for intelligent information is productized and an application is implemented. Application fields of the intelligent product and industry application mainly include intelligent terminals, intelligent transportation, intelligent healthcare, autonomous driving, smart cities, and the like.

(6) Neural network

The neural network may include neurons. The neuron may be an operation unit that uses xs (namely, input data) and an intercept of 1 as an input. An output of the operation unit may be as follows:

$$h_{W,b}(x) = f\left(W^T x\right) = f\left(\sum_{s=1}^{n} W_s x_s + b\right);$$

where

s=1, 2, ..., or n, n is a natural number greater than 1, Ws is a weight of xs, and b is a bias of the neuron. f is an activation function (activation function) of the neuron, and is used for introducing a non-linear feature into the neural network, to convert an input signal in the neuron into an output signal. The output signal of the activation function may be used as an input of a next convolutional layer, and the activation function may be a sigmoid function. The neural network is a network formed by connecting a plurality of single neurons together. To be specific, an output of a neuron may be an input of another neuron. An input of each neuron may be connected to a local receptive field of a previous layer, to extract a feature of the local receptive field. The local receptive field may be a region including several neurons.

There are a plurality of types of neural networks. For example, a deep neural network (deep neural network, DNN) is also referred to as a multi-layer neural network, that is, a neural network having a plurality of hidden layers. For another example, a convolutional neural network (convolutional neural network, CNN) is a deep neural network with a convolutional structure. A specific type of the used neural network is not limited in this application.

(7) Deep neural network

The deep neural network (Deep Neural Network, DNN) may be understood as a neural network having many hidden layers. There is no special metric standard for "many" herein. A multi-layer neural network and the deep neural network are essentially the same. The DNN is divided based on locations of different layers, and the neural network in the DNN may be divided into three types of layers: an input layer, a hidden layer, and an output layer. Generally, a 1st layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Simply speaking, work at each layer may be understood as the following linear relationship expression: $\vec{y} = \alpha(W\vec{x} + \vec{b})$, where $\vec{x}$ is an input vector, $\vec{y}$ is an output vector, $\vec{b}$ is a bias vector, W is a weight matrix (also referred to as a coefficient), and $\alpha()$ is an activation function. At each layer, the output vector $\vec{y}$ is obtained by performing such a simple operation on the input vector $\vec{x}$. Due to a large quantity of DNN layers, quantities of coefficients W and bias vectors b are also large. The following describes how specific parameters are defined in the DNN. First, a definition of the coefficient W is described. A three-layer DNN is used as an example. For example, a linear coefficient from a $4^{th}$ neuron at a $2^{nd}$ layer to a $2^{nd}$ neuron at a $3^{rd}$ layer is defined as $W_{24}^{3}$, where the superscript 3 represents a layer at which the coefficient W is located, and the subscripts correspond to an output $3^{rd}$-layer index 2 and an input $2^{nd}$-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the parameter *W*. In the deep neural network, more hidden layers make the network more capable of describing a complex case in the real world. Theoretically, a model with more parameters has higher complexity and a larger "capacity". It indicates that the model can complete a more complex learning task.

(8) A convolutional neural network (convolutional neural network, CNN) is a deep neural network with a convolutional structure. The convolutional neural network includes a feature extractor including a convolutional layer and a sub-sampling layer. The feature extractor may be considered as a filter. A convolution process may be considered as performing convolution by using a trainable filter and an input image or a convolution feature map (feature map). The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature maps, and each feature map may include some neurons that are in a rectangular arrangement. Neurons in a same feature map share a weight, and the weight shared herein is a convolution kernel. Weight sharing may be understood as that an image information extraction manner is irrelevant to a location. A principle implied herein is that statistical information of a part of an image is the same as that of another part. This means that image information learned in a part can also be used in another part. Therefore, the same image information obtained through learning can be used for all locations on the image. At a same convolutional layer, a plurality of convolution kernels may be used for extracting different image information. Usually, a larger quantity of convolution kernels indicates richer image information reflected in a convolution operation.

The convolution kernel may be initialized in a form of a random-size matrix. In a process of training the convolutional neural network, an appropriate weight may be obtained through learning for the convolution kernel.

(9) Back propagation algorithm

The convolutional neural network may correct a value of a parameter in an initial super-resolution model in a training process by using an error back propagation (back propagation, BP) algorithm, so that an error loss of reconstructing the super-resolution model becomes smaller. Specifically, an input signal is transferred forward until the error loss occurs at an output, and the parameter in the initial super-resolution model is updated based on back propagation of error loss information, to make the error loss converge. The back propagation algorithm is an error-loss-centered back propagation motion intended to obtain a parameter, such as a weight matrix, of an optimal super-resolution model.

The object pickup method in embodiments of this application may be applied to a computer device. In some examples, the computer device may be used as a host computer of a pickup apparatus, to control the pickup apparatus.

There may be a plurality of specific types of the computer device. This is not limited herein. For example, the computer device may be a terminal device, a server, a container (container), or a virtual machine (virtual machine).

In an example, the computer device may be a terminal device. For example, the terminal device may be a mobile phone (mobile phone), a tablet computer (tablet computer), a computer with a wireless transceiver function, a virtual reality (virtual reality, VR) terminal, an augmented reality (augmented reality, AR) terminal, a terminal in industrial control (industrial control), a terminal in self driving (self driving), a terminal in telemedicine (telemedicine), a terminal in a smart grid (smart grid), a terminal in transportation safety (transportation safety), a terminal in a smart city (smart city), a terminal in a smart home (smart home), a terminal in an internet of things (Internet of things, IoT), or the like.

When the computer device is the terminal device, the terminal device may directly or indirectly control the pickup apparatus to move.

For example, the terminal device may directly send an indication signal to the pickup apparatus, to indicate the pickup apparatus to move. Alternatively, another component (for example, a motor) may be further included between the terminal device and the pickup apparatus. In this case, the terminal device may control a component such as the motor or a solenoid valve to drive an end effector in the pickup apparatus to move.

In another example, the computer device may be a cloud device, for example, may be a cloud server, a cloud server cluster, a cloud container, or a cloud virtual machine.

In this case, a neural network may be deployed in the cloud device, and the cloud device may perform embodiments of this application, to obtain control information used for controlling the pickup apparatus, and then send the control information to the pickup apparatus, to control motion of the pickup apparatus. Alternatively, the cloud device may send the control information to a local terminal device corresponding to the pickup apparatus, to control motion of the pickup apparatus by using the local terminal device.

The pickup apparatus may include an end effector.

A structure and a type of the pickup apparatus may be determined based on an actual application scenario. This is not limited in embodiments of this application.

For example, the pickup apparatus may include a plurality of types of end effectors, and different end effectors are configured to pick up different types of objects.

It should be noted that, in the pickup apparatus, there may be one or more end effectors of a same type.

For example, in an example, the pickup apparatus may include a plurality of suction cups. The plurality of suction cups may work independently to suck different objects, or may be configured to suck a same object.

In the pickup apparatus, the end effectors may be arranged in a plurality of manners. For example, the plurality of end effectors may be arranged in the pickup apparatus in an array, or may be irregularly arranged in the pickup apparatus. In addition, in some examples, an arrangement manner of the plurality of end effectors in the pickup apparatus may alternatively vary with an application scenario.

In embodiments of this application, the computer device and the pickup apparatus may be located in a same physical device, for example, located on a same robot. In this case, the computer device and the pickup apparatus may be modules on the robot. Alternatively, the computer device and the pickup apparatus may be located in different physical devices. For example, the computer device is located in a cloud, and the pickup apparatus is located on a local robot. In this case, the computer device may control the pickup apparatus through a communication connection.

As shown in FIG. 2, in this embodiment of this application, the object pickup method implemented with reference to the neural network includes steps 201 to 203.

Step 201: Obtain point cloud data about a target object.

In this embodiment of this application, the target object may be an object to be picked up. The target object may be of a plurality of types, sizes, and/or materials. This is not limited herein.

For example, in an application scenario of cargo handling, a material of the target object may be one or more of a carton, a paper bag, a foam bag, a foam box, a plastic bag, and the like that wrap cargos. Usually, in actual application, a non-destructive pickup manner is used for picking up an object. Therefore, in many examples, a material of a surface of the target object is usually used as the material of the target object.

The point cloud data about the target object may be point cloud data including feature points about the target object. In some examples, the point cloud data may also be considered as scenario point cloud data of a scenario in which the target object is located. Alternatively, the point cloud data about the target object is obtained by performing operations, such as filtering, downsampling, and plane removal that is based on a plane equation, on scenario point cloud data to delete some point clouds that are unhelpful for subsequent processing from the scenario point cloud data.

The point cloud data about the target object may be obtained in a plurality of manners.

For example, the point cloud data may be pre-stored in a computer device that performs embodiments of this application, may be transmitted to the computer device via another device, or may be generated by the computer device based on data collected by a sensing device such as a camera in the computer device.

For example, the point cloud data may be generated based on data collected by a depth camera, a laser radar, or the like.

For example, an example manner of generating the point cloud data may include the following steps:

obtaining a depth map of a scenario including the target object;
obtaining, based on the depth map, scenario point cloud data corresponding to the scenario; and
preprocessing the scenario point cloud data, to obtain the point cloud data about the target object.

The depth map may be obtained in a plurality of manners. For example, the depth map may be obtained by using a depth camera, a laser radar, or structured light. After the depth map is obtained, the scenario point cloud data may be obtained based on the depth map.

A manner of obtaining, based on the depth map, the scenario point cloud data corresponding to the scenario may be implemented based on a related technology. This is not limited in this embodiment of this application.

For example, the depth map is collected by using the depth camera. In this case, coordinates of a pixel in the depth map in a camera coordinate system of the depth camera may be calculated based on information about the depth map and an internal parameter of the depth camera. Coordinates of the pixel in the depth map in a world coordinate system may be calculated based on the information about the depth map and the internal parameter and an external parameter of the depth camera. Then, the scenario point cloud data may be obtained based on the coordinates of the pixel in the depth map in the world coordinate system.

After the scenario point cloud data is obtained, the scenario point cloud data may be preprocessed. For example, noise and some data information that is unhelpful for subsequent processing may be reduced, to reduce interference information, so that the obtained point cloud data is more conducive to a subsequent data processing operation. For example, the preprocessing may include processing operations such as filtering, downsampling, and background plane removal that is based on a plane equation, to delete some point cloud information (for example, some noise and/or background point cloud information in the scenario point cloud data) that is unhelpful for subsequent processing from the scenario point cloud data, so as to obtain the point cloud data about the target object. In addition, the preprocessing may further include a uniform sampling operation (for example, a last step of the preprocessing is the uniform sampling operation). In this way, a density degree of the scenario point cloud data may be reduced through uniform sampling, and a data amount may be reduced, thereby reducing a subsequent data processing amount and reducing consumption of computing resources. In some examples, after the preprocessing, the point cloud data may include only feature points about the target object. In this way, the point cloud data may describe a contour of the target object. This provides a good data basis for subsequent processing operations of type recognition and target pickup posture determining, reduces impact of interference data, and improves accuracy of a subsequent processing result.

Step 202: Obtain target pickup posture information and type information of the target object that are obtained by processing the point cloud data via a neural network.

The target pickup posture information is used for describing a target pickup posture of a pickup apparatus for the target object.

After the point cloud data is obtained, the point cloud data may be processed via the neural network, to obtain the target pickup posture information and the type information of the target object.

The neural network may process the point cloud data in a plurality of manners.

For example, the point cloud data may be directly input into the neural network for processing via the neural network. In this case, the neural network includes a neural network structure that can process the point cloud data, for example, may include a network such as Pointnet. In addition, the point cloud data may be further input into the neural network for processing after specified processing is performed on the point cloud data. For example, if the neural network includes a graph convolutional network, the point cloud data may be processed to obtain a corresponding graph structure, and then the graph structure is used as an input of the graph convolutional network. Specifically, in an example, searching and matching may be performed on the point cloud data based on a parameter of an end effector, to obtain, from the point cloud data, local point cloud data used for representing a candidate pickup posture, and generate a graph structure based on each set of local point cloud data. In this way, the graph convolutional network may determine a target pickup posture based on information about each candidate pickup posture described in the graph structure.

There may be a plurality of specific structures of the neural network. This is not limited in this embodiment of this application.

In some examples, the neural network may include a dual-branch structure. An output of one branch structure in the dual-branch structure is the target pickup posture information, and an output of the other branch structure is the type information of the target object.

The two branch structures included in the dual-branch structure may be two parallel structures, or may be a partially shared structure and a partially parallel structure. In addition, data of the two branch structures included in the dual-branch structure may be executed independently of each other, or there may be some data that can be used for the two branch structures. For example, data output at a layer in one branch structure may be used as a part of input at a layer in the other branch structure, so that the data is processed at the layer of the other branch structure. In addition, in the dual-branch structure, inputs of the two branch structures may be the same, may be different, or may be partially the same.

The target pickup posture information indicates a posture, namely, the target pickup posture, in which the pickup apparatus picks up the target object.

For example, the target pickup posture information may include 6-dimensional (6-dimensional, 6D) pose information, where 6D includes six degrees of freedom (degrees of freedom, DoFs), and specifically includes translation (translation) of three degrees of freedom, and spatial rotation (rotation) of three degrees of freedom. For example, the target pickup posture information may be described by using three-dimensional coordinates and a normal vector of a target pickup point at which the pickup apparatus picks up the target object.

It should be noted that there may be a plurality of manners in which the neural network processes the point cloud data to obtain the target pickup posture information.

For example, in some examples, an output about the target pickup posture obtained by processing the point cloud data via the neural network may be the three-dimensional coordinates of the target pickup point. Then, the normal vector corresponding to the target pickup point may be obtained from the point cloud data. In this case, the three-dimensional coordinates and the normal vector may be in the camera coordinate system of the depth camera or the world coordinate system corresponding to the point cloud data, and the described target pickup posture is also in the corresponding camera coordinate system of the depth camera or the corresponding world coordinate system. To control the pickup apparatus, the three-dimensional coordinates and the normal vector need to be converted based on a coordinate system corresponding to the pickup apparatus, and the pickup apparatus is controlled based on converted three-dimensional coordinates and a converted normal vector.

Alternatively, in some examples, an output about the target pickup posture obtained by processing the point cloud data via the neural network may be the three-dimensional coordinates and the normal vector of the target pickup point. In this case, the three-dimensional coordinates and the normal vector of the target pickup point that are output by the neural network may be converted based on a coordinate system corresponding to the pickup apparatus, and the pickup apparatus is controlled based on converted three-dimensional coordinates and a converted normal vector.

The type information of the target object indicates a type of the target object. In some cases, the target object may include a plurality of materials. Correspondingly, the target object may correspond to a plurality of types of information. In this case, in different scenarios, the type information of the target object may indicate a type of the entire target object, or may indicate a type of a part that is of the target object and that is in contact with the pickup apparatus when the pickup apparatus picks up the target object.

Step 203: Control, based on the target pickup posture information and the type information, the pickup apparatus to pick up the target object.

After the target pickup posture information and the type information of the target object are obtained, the pickup apparatus may be controlled to determine an appropriate pickup mode based on the type information of the target object, and a good grasping posture for the target object may be determined based on the target pickup posture information, so that the target object is stably picked up in the appropriate pickup mode and the good grasping posture, to successfully execute a pickup task.

For example, an appropriate end effector may be determined from the pickup apparatus based on the type information of the target object, or an appropriate pickup parameter may be determined based on the type information of the target object. For example, when a size of the target object is within a preset size range, if the type of the target object is metal, a value of the pickup parameter of the end effector (for example, an airflow rate of a suction cup) may be determined, so that pickup force of the end effector is large; or if the type of the target object is plastic, a value of the pickup parameter of the end effector may be determined, so that pickup force of the end effector is small. Then, the pickup apparatus may be controlled to pick up the target object by using the appropriate end effector, the appropriate pickup parameter, and an accurate posture.

It can be learned that, in this embodiment of this application, the neural network may obtain the target pickup posture information and the type information of the target object based on the point cloud data about the target object, so that for details of the target object, the target object can be adaptively picked up in an appropriate pickup manner and an appropriate pickup posture.

In this embodiment of this application, the pickup apparatus may be controlled based on the target pickup posture information and the type information that are obtained via the neural network, to pick up the target object, so that collaborative control combining software and hardware is implemented, objects with varying details can be successfully picked up, and a pickup task in a complex scenario can be adaptively completed.

The following describes an example of a solution in which the software and the hardware are combined.

In some embodiments, the pickup apparatus includes a plurality of types of end effectors, and different types of end effectors are configured to pick up different types of objects.

Step 203 includes the following steps:

determining a target pickup mode of the pickup apparatus based on the type information, where the target pickup mode indicates an end effector used for picking up the target object; and

controlling the pickup apparatus to pick up, in the target pickup mode, the target object based on the target pickup posture indicated by the target pickup posture information.

There may be a plurality of options for a type of end effector of the pickup apparatus. For example, the plurality of types of end effectors may include at least two of a robotic arm, a suction cup, and a magnetic suction end effector. Alternatively, the plurality of types of end effectors may include a plurality of types of robotic arms, a plurality of types of suction cups, and a plurality of types of magnetic suction end effectors. The suction cup is used as an example. The plurality of types of suction cups may include a single-tower suction cup, a multi-corrugated suction cup, and the like. In this embodiment of this application, a specific classification manner of the types is not limited herein.

When different end effectors are used, manners of picking up an object may be different.

For example, an end effector may be a robotic arm. In this case, the object may be grasped by using the robotic arm. For another example, an end effector may be a suction cup. In this case, the object may be sucked by using the suction cup. For still another example, an end effector is a magnetic suction end effector. In this case, the object may be sucked in a magnetic suction manner.

In the pickup apparatus, there may be one or more end effectors of a same type. In addition, the plurality of end effectors may work independently to pick up different objects, or may be configured to pick up a same object.

In the pickup apparatus, the end effectors may be arranged in a plurality of manners. For example, the plurality of end effectors may be arranged in the pickup apparatus in an array, or may be irregularly arranged in the pickup apparatus. In addition, in some examples, an arrangement manner of the plurality of end effectors in the pickup apparatus may alternatively vary with an application scenario. In addition, a spacing between the end effectors may also be determined based on information such as a size and a form of an object to be picked up in an actual application scenario.

FIG. 3 is an example diagram of a control procedure.

A computer device may process point cloud data via a neural network, to obtain type information of a target object and a target pickup posture, and then control a pickup apparatus to switch to a target pickup mode based on the type information of the target object. In this way, an end effector used for picking up the target object is switched to, and the pickup apparatus is controlled to execute a pickup task in the target pickup posture.

In this embodiment of this application, a plurality of types of end effectors are disposed in the pickup apparatus, so that an appropriate end effector can be selected for pickup based on a type of an object to be picked up (for example, the target object in this embodiment of this application). Therefore, an appropriate pickup mode may be adaptively selected for pickup based on the type of the object to be picked up in an actual scenario. In addition, an accurate pickup posture may be further determined via the neural network. In this way, based on the actual scenario, the pickup apparatus can be adaptively controlled to pick up the target object in the appropriate pickup mode and the accurate posture, so that the pickup task is successfully executed.

In this embodiment of this application, the neural network may be deployed in the computer device, to determine the type of the object to be picked up and the pickup posture of the pickup apparatus based on the neural network.

The following describes some embodiments of the neural network by using examples.

In some embodiments, the neural network includes a first convolutional network and a second convolutional network.

Step 202 includes the following steps:

obtaining the target pickup posture information based on the point cloud data via the first convolutional network; and
obtaining the type information of the target object based on the point cloud data via the second convolutional network.

In this embodiment of this application, specific structures of the first convolutional network and the second convolutional network are not limited herein. In addition, in this embodiment of this application, both the first convolutional network and the second convolutional network may include a convolution operation, and specific manners of the convolution operations in the first convolutional network and the second convolutional network are not limited.

For example, the convolution operation in the neural network may include one or more of a convolution operation on a matrix, a graph convolution operation on a graph structure, a convolution operation on the point cloud data, and the like. For different input data forms, specific manners of corresponding convolution operations may be different. For example, specific manners of the graph convolution operation on the graph structure and the convolution operation on the point cloud data may be different. For implementation, refer to a current or subsequently developed related technology, details are not described in this embodiment of this application.

In this embodiment of this application, the first convolutional network and the second convolutional network may be two parallel structures, or may be a partially shared structure and a partially parallel structure. In addition, data of the first convolutional network and data of the second convolutional network may be executed independently of each other, or there may be some data that can be used for the first convolutional network and the second convolutional network. For example, data output at a layer of the first convolutional network may be used as a part of input at a layer of the second convolutional network. In addition, inputs of the first convolutional network and the second convolutional network may be the same, may be different, or may be partially the same.

In some examples, the target pickup posture information may be directly obtained through an output of the first convolutional network. In another example, an output of the first convolutional network may alternatively be processed by using an information processing operation such as information conversion, to obtain the target pickup posture information. For example, the output of the first convolutional network may be the three-dimensional coordinates of the target pickup point in the camera coordinate system of the depth camera corresponding to the point cloud data. Then, the normal vector of the target pickup point in the camera coordinate system may be obtained from the point cloud data. To control the pickup apparatus, the three-dimensional coordinates and the normal vector of the target pickup point in the camera coordinate system need to be converted based on the coordinate system corresponding to the pickup apparatus, and the pickup apparatus is controlled based on the converted three-dimensional coordinates and the converted normal vector.

In this embodiment of this application, the target pickup posture information and the type information of the target object are respectively obtained by using two branch structures (namely, the first convolutional network and the second convolutional network), to evaluate a pickup manner of the target object based on comprehensive information. In this way, for objects with varying details, appropriate manners are adaptively selected for pickup, so that requirements of a plurality of application scenarios can be met.

In some embodiments, the foregoing step of obtaining the target pickup posture information based on the point cloud data via the first convolutional network includes:

obtaining, from the point cloud data based on structure information of the end effector of the pickup apparatus, at least two sets of local point cloud data that match the end effector, where each set of local point cloud data corresponds to one candidate pickup posture; and
obtaining the target pickup posture information based on the at least two sets of local point cloud data via the first convolutional network.

The structure information of the end effector is used for describing a structure of the end effector, and may include, for example, structure information of a part that is of the end effector and that is associated with an object when the end effector picks up the object. For different types of end effectors, the structure information may be different.

For example, an end effector is a suction cup, and a contact surface between the suction cup and an object is usually circular when the suction cup picks up the object. Therefore, structure information of the suction cup may include a radius, a diameter, or the like of a contact part between the suction cup and the object. In this way, the suction cup may be equivalent to a form of a circular plane region.

For another example, an end effector is a robotic arm. When picking up an object, the robotic arm may implement, for example, semi-encirclement or full-encirclement grasping by using a plurality of end fingers on the robotic arm. Therefore, structure information of the robotic arm may be used for describing a grasping posture formed by an end finger of the robotic arm. In this case, the structure information of the robotic arm may include information such as a size of an end robot gripper finger of the robotic arm (for example, a length, a width, and a height of each end robot gripper finger), and a distance between the end robot gripper fingers.

After the structure information is obtained, a manner of obtaining, from the point cloud data based on the structure information, the at least two sets of local point cloud data that match the end effector is not limited herein.

For example, an equivalent shape may be constructed based on the structure information of the end effector of the pickup apparatus, to describe the corresponding end effector based on the equivalent shape.

After the equivalent shape is obtained, the local point cloud data may be obtained from the point cloud data by using the equivalent shape. For example, the point cloud data may be converted into a form of a k-dimensional tree (kd-tree), and then the equivalent shape is projected on a contour of the target object described by using the kd-tree. If a projection region meets a specified condition, a set of local point cloud data is obtained based on a point cloud corresponding to the current projection region in the point cloud data.

The specified condition may be determined based on an actual application scenario, a type of the end effector, and the like. For example, the specified condition may include meeting a constraint condition of force closure and form closure. The form closure refers to a state in which no pose change can occur on an object due to a set of static constraints applied to a surface of the object, and the set of static constraints is determined entirely by a pickup location of the end effector such as the robotic arm. In this case, the state is referred to as a form closure state, and a set of pickup operations is referred to as a form closure pickup operation. The force closure refers to a state in which no pose change can occur on an object due to a set of static constraints applied to a surface of the object, and the set of static constraints is determined entirely by a force helix applied to a contact point of the object by an end part of the end effector, for example, the finger of the robotic arm. In this case, the state is referred to as a force closure state, and a set of pickup operations is referred to as a force closure pickup operation. For a specific calculation process based on the constraint condition such as the form closure and/or the force closure, refer to an existing and subsequently developed related technology. This is not limited in this embodiment of this application.

A relative pose between the equivalent shape and the point cloud data may be adjusted and projected by using a specified search rule.

If a projection region corresponding to only one time of projection meets the specified condition, only one set of local point cloud data is obtained. In this case, a candidate pickup posture corresponding to the set of local point cloud data may be used as the target pickup posture. In other words, the target pickup posture information may be obtained based on the set of local point cloud data.

If projection regions corresponding to at least two times of projection meet the specified condition, at least two sets of local point cloud data may be obtained, to subsequently obtain the target pickup posture information based on the at least two sets of local point cloud data via the first convolutional network.

Based on different application scenarios, the equivalent shape may be a two-dimensional graph. For example, an equivalent shape corresponding to the suction cup may be the circular plane region. Alternatively, the equivalent shape may be a three-dimensional shape.

The following uses a specific example to describe an example process of obtaining the local point cloud data.

In an example, the end effector is a two-finger robot gripper. In this case, an example equivalent shape corresponding to the two-finger robot gripper is shown in FIG. 4a. Structure information of the two-finger robot gripper may include a length, a width, and a height of each robot gripper and a distance between the robot grippers.

In an example diagram of obtaining the local point cloud data as shown in FIG. 4b, after the equivalent shape is obtained, the equivalent shape may be projected on a contour of the target object described in the point cloud data. If a projection region meets the specified condition (for example, meets the constraint condition of the force closure and the form closure), a set of local point cloud data may be obtained based on a point cloud corresponding to the current projection region in the point cloud data.

In another example, the equivalent shape corresponding to the suction cup is the circular plane region. In this case, the circular plane region may be projected on a point cloud corresponding to a contour of the target object. If a projection region on the point cloud corresponding to the contour of the target object meets the specified condition, a set of local point cloud data is obtained based on the point cloud corresponding to the current projection region in the point cloud data. For example, if the projection region on the point cloud corresponding to the contour of the target object is a circle, a center of the circle is used as a candidate pickup point, and a set of local point cloud data is obtained based on information about the candidate pickup point.

In some scenarios, the pickup apparatus includes a plurality of types of end effectors. In this case, equivalent shapes corresponding to the plurality of types of end effectors may be the same or may be different.

For example, the pickup apparatus may include a single-tower suction cup and a multi-corrugated suction cup, and sizes of contact surfaces when the two types of suction cups suck an object may be the same. Therefore, equivalent shapes corresponding to the single-tower suction cup and the multi-corrugated suction cup may be the same, and each end effector in the pickup apparatus may be described by using the equivalent shape. Correspondingly, candidate pickup postures described in the obtained plurality of sets of local point cloud data are applicable to suction cups in the pickup apparatus.

Alternatively, the plurality of types of end effectors included in the pickup apparatus correspond to different equivalent shapes. In this case, a set of outputs may be obtained for structure information of each end effector via the neural network. In this case, the outputs are used for describing a pickup posture and a corresponding type of a corresponding end effector for the target object. In this way, pickup postures and corresponding types of the plurality of end effectors for the target object may be obtained, and then an appropriate end effector may be selected from the plurality of end effectors based on information such as a preset priority, a control difficulty, and control resource consumption. In addition, a pickup posture of the appropriate end effector for the target object is used as the target pickup posture, and the corresponding type is used as the type of the target object.

Each set of local point cloud data may include information about at least one candidate pickup point, to describe a corresponding candidate pickup posture.

The at least one candidate pickup point may be used for describing a candidate location for picking up the target object by using the end effector.

For example, if the end effector is a suction cup, because a structural part in which the suction cup is in contact with the target object is a circular plane region, in other words, the circular plane region may represent a candidate location for the suction cup to pick up the target object, the at least one candidate pickup point may include a center of a circle of the corresponding circular plane region.

The candidate pickup posture may be represented by using the at least one candidate pickup point. If the local point cloud data includes not only the information about the candidate pickup point, but also the structure information of the end effector, the candidate pickup posture can be described more comprehensively. In this case, the local point cloud data may not only describe a candidate pickup pose of the pickup apparatus for the target object, but also include information such as a contact region when the pickup apparatus picks up the target object.

After the at least two sets of local point cloud data are obtained, the target pickup posture information may be obtained based on the at least two sets of local point cloud data via the first convolutional network. The first convolutional network may determine a target candidate posture based on the candidate pickup postures respectively corresponding to the plurality of sets of local point cloud data, to output target candidate posture information.

In this embodiment of this application, a form of input data of the first convolutional network is not limited herein. The plurality of sets of local point cloud data may be described based on a specified data structure (for example, a graph structure), and the specified data structure is input into the first convolutional network.

In some embodiments, the first convolutional network is a graph convolutional network.

The foregoing step of obtaining the target pickup posture information based on the at least two sets of local point cloud data via the first convolutional network includes:

obtaining a graph structure based on the at least two sets of local point cloud data, where each node in the graph structure corresponds to one piece of local point cloud data; and
processing the graph structure via the first convolutional network, to obtain the target pickup posture information.

In this embodiment of this application, the graph structure may include a node and an edge.

Each node in the graph structure may uniquely correspond to one piece of local point cloud data. Specifically, if the local point cloud data is not filtered in a graph construction process, nodes in the graph structure may be in one-to-one correspondence with the local point cloud data.

Node information of each node in the graph structure may include corresponding local point cloud data, for example, may include information about three-dimensional coordinates of a corresponding candidate pickup point and/or structure information of a corresponding end effector.

However, after each set of local point cloud data is obtained, an association relationship between the sets of local point cloud data usually cannot be determined. Therefore, in the graph structure, edges between nodes may be generated in a manner such as random initialization. In this case, the edges between the nodes in the graph structure cannot reflect a real association relationship between the sets of local point cloud data.

It can be learned that, in this embodiment of this application, each set of local point cloud data is converted into a form of the graph structure in a graph construction manner, so that the at least two sets of local point cloud data are described by using structured data, to meet a form requirement of the graph convolutional network on input data.

However, because the association relationship between the sets of local point cloud data cannot be determined in this case, a connection relationship between the nodes in the graph structure may be considered as being generated through initialization, and does not reflect the real association relationship between the sets of local point cloud data. In this case, the association relationship between the sets of local point cloud data may be determined in a process of processing the graph structure via the graph convolutional network. In other words, it may be considered that the graph convolutional network can determine the edges between the nodes in the graph structure and weights of the edges, and can determine the target pickup posture based on the edges between the nodes in the graph structure and the weights of the edges and based on the candidate pickup posture corresponding to each set of local point cloud data.

A specific type of the graph convolutional network is not limited herein. For example, the graph convolutional network may include a first feature extraction network and a first classifier, to extract a semantic feature from each piece of local point cloud data via the first feature extraction network. Then, the first classifier processes the semantic feature, to output the target pickup posture.

In some examples, the local point cloud data may include information about the corresponding candidate pickup point. In different phases of subsequent processing based on the information about the candidate pickup point, different information about the candidate pickup point may be applied.

For example, in an example, when the graph structure is generated based on the information about the candidate pickup point, the node information in the graph structure may include the information about the three-dimensional coordinates of the corresponding candidate pickup point. After the graph structure is obtained, the graph structure may be processed via the graph convolutional network, to output the three-dimensional coordinates of the target pickup point. In this case, a 6D pickup pose of the pickup apparatus for the target object may be determined based on the normal vector and the three-dimensional coordinates of the target pickup point in the point cloud data. Specifically, the normal vector and the three-dimensional coordinates of the target pickup point in the coordinate system corresponding to the point cloud data may be converted into the normal vector and the three-dimensional coordinates in the coordinate system corresponding to the pickup apparatus. Then, the target pickup pose of the pickup apparatus for the target object is determined based on the three-dimensional coordinates and the normal vector of the target pickup point in the coordinate system corresponding to the pickup apparatus.

FIG. 5 is an example diagram of obtaining a target pickup posture of a target object.

In an example shown in FIG. 5, a plurality of sets of local point cloud data may be obtained based on point cloud data and structure information of an end effector, then graph construction is performed on the plurality of sets of local point cloud data to obtain a corresponding graph structure, and the graph structure is input into a graph convolutional network to obtain target pickup posture information output by the graph convolutional network.

In this embodiment of this application, the plurality of sets of local point cloud data can be effectively integrated by using the graph structure, so that the target pickup posture information is obtained via the graph convolutional network based on a plurality of candidate pickup postures described in the graph structure.

In some embodiments, a first convolutional network includes a first feature extraction network and a first classifier, and the first feature extraction network is located before the first classifier.

The foregoing step of obtaining the type information of the target object based on the point cloud data via the second convolutional network includes:
obtaining the type information of the target object via the second convolutional network based on the point cloud data and first feature information that is output by the first feature extraction network when the first convolutional network performs processing based on the point cloud data.

The first feature extraction network is configured to perform feature extraction on a corresponding input (for example, the graph structure). A quantity and types of layers included in the first feature extraction network are not limited herein. For example, the first feature extraction network may include one or more of a convolutional layer, an activation layer, a pooling layer, and the like. The first classifier is configured to classify a corresponding input (for example, feature information output at a previous layer of the first classifier), to obtain a corresponding classification result. If the first classifier is a last layer of the first convolutional network, an output of the first classifier may be the target pickup posture information. A quantity and types of layers included in the first classifier are not limited herein. For example, the first classifier may include a fully connected layer.

A specific location relationship between the first feature extraction network and the first classifier in the first convolutional network is not specifically limited herein.

In an example, the first feature extraction network is a network of a previous layer of the first classifier, and an output of the first feature extraction network is an input of the first classifier. In another example, another layer may be included between the first feature extraction network and the first classifier. In addition, in some examples, the first convolutional network may further include a structure other than the first feature extraction network and the first classifier.

An input of the second convolutional network includes the point cloud data and the output of the first feature extraction network when the first convolutional network performs processing based on the point cloud data.

In this embodiment of this application, in a process of determining the target pickup posture of the pickup apparatus for the target object, the first convolutional network usually needs to extract a local feature corresponding to the target pickup posture. In other words, the first feature information output by the first feature extraction network when processing is performed based on the point cloud data in the first convolutional network may include local feature information corresponding to the target pickup posture.

Based on this, in this embodiment of this application, a type of the target object is not only identified based on global point cloud data, but also identified with reference to the local feature information included in the first feature information.

In the second convolutional network, the point cloud data and the first feature information may be combined in a plurality of manners.

Because the first feature information output by the first feature extraction network is an intermediate layer output of the first convolutional network, and is usually greatly different from a data form and a corresponding semantic of the point cloud data, the point cloud data and the first feature information usually cannot be directly combined. In this case, the point cloud data and the first feature information may not be directly combined, but the point cloud data is used as the input of the second convolutional neural network. In addition, in a process of processing the point cloud data via the second convolutional network, at an intermediate layer of the second convolutional network, an output of a previous layer of the intermediate layer and the first feature information output by the first feature extraction network are combined and are used as an input for processing, so that processing is performed at the intermediate layer and a subsequent layer with reference to a feature of the global point cloud data and the local feature information extracted via the first feature extraction network, to accurately identify the type of the target object with reference to comprehensive feature information.

In some embodiments, the second convolutional network includes a second feature extraction network and a second classifier.

The foregoing step of obtaining the type information of the target object via the second convolutional network based on the point cloud data and first feature information that is output by the first feature extraction network when the first convolutional network performs processing based on the point cloud data includes:

processing the point cloud data via the second feature extraction network, to obtain second feature information;
aggregating the first feature information and the second feature information, to obtain an aggregation result; and
processing the aggregation result by using the second classifier, to obtain the type information of the target object.

In this embodiment of this application, a specific type of the second convolutional network is not limited herein. The second convolutional network may process the point cloud data. For example, the second convolutional network may be a PointNet network or another open-source network that can process the point cloud data, or may be a network developed by research and development personnel.

The second feature extraction network is configured to perform feature extraction on the point cloud data, to obtain global feature information about the point cloud data. A quantity and types of layers included in the second feature extraction network are not limited herein. For example, the second feature extraction network may include one or more of a convolutional layer, an activation layer, a pooling layer, and the like. The second classifier is configured to classify a corresponding input (for example, feature information output at a previous layer of the second classifier), to obtain a corresponding classification result. If the second classifier is a last layer of the second convolutional network, an output of the second classifier may be the type information of the target object. A quantity and types of layers included in the second classifier are not limited herein. For example, the second classifier may include a fully connected layer. Certainly, in some examples, the second convolutional network may further include a structure other than the second feature extraction network and the second classifier. This is not limited in this embodiment of this application.

In this embodiment of this application, the second feature extraction network may be a network of a previous layer of the second classifier. In this case, an input of the second classifier is the aggregation result of the first feature information and the second feature information.

There may be a plurality of specific aggregation manners. This is not limited herein. For example, the first feature information and the second feature information may be spliced, to obtain the aggregation result; the first feature information and the second feature information may be respectively multiplied by respective corresponding weights, and then spliced, to obtain the aggregation result; or corresponding elements of the first feature information and the second feature information may be summed up, to obtain the aggregation result.

The second feature information usually includes global feature information of the target object in the point cloud data. The first feature information may be feature information obtained based on the plurality of sets of local point cloud data. In this case, the first feature information usually includes the local feature information of the target object in the point cloud data. It can be learned that, in this embodiment of this application, the second classifier may aggregate the local feature information and the global feature information of the target object to determine a type of the target object, to accurately classify the target object with reference to complete information.

FIG. 6 is an example diagram of a neural network.

A plurality of sets of local point cloud data may be obtained based on point cloud data and structure information of an end effector, then graph construction is performed on the plurality of sets of local point cloud data to obtain a corresponding graph structure, and the graph structure is input into a first convolutional network to obtain target pickup posture information output by the first convolutional network.

The first convolutional network specifically includes a first feature extraction network and a first classifier. An output of the first feature extraction network about the graph structure is first feature information, and the first feature information may include local feature information about a target object.

In addition, the point cloud data may be input into a second feature extraction network of a second convolutional network, to obtain second feature information. The second feature information may include global feature information about the target object.

Then, the first feature information and the second feature information are aggregated, to obtain an aggregation result, and then the aggregation result is processed by using a second classifier, to obtain type information of the target object.

In this embodiment of this application, the neural network may be a trained model.

The following describes a training process of the first convolutional network and the second convolutional network by using an example.

In this embodiment of this application, a training dataset may be constructed in advance. Each training sample in the training dataset includes a set of training point cloud data, and each training sample corresponds to a pickup posture label and a type label.

For example, the training point cloud data may be obtained by collecting a depth map by using a depth camera and converting information such as the depth map and an internal parameter of the depth camera.

The pickup posture label may be obtained based on a mechanical criterion such as form closure and/or force closure. For a specific calculation process of obtaining the pickup posture label based on the mechanical criterion such as the form closure and/or force closure, refer to an existing and subsequently developed related technology. This is not limited in this embodiment of this application.

The type label may be obtained through manual labeling or the like.

After the training dataset is obtained, end-to-end training may be performed on a to-be-trained neural network based on the training dataset.

The following processing process is referred to as a specified function: a processing process of obtaining, from the training point cloud data based on structure information of an end effector, at least two sets of local training point cloud data that match the end effector, and then obtaining a training graph structure based on the at least two sets of local training point cloud data. In this case, in each iteration process, the training point cloud data may be used as an input of a to-be-trained second convolutional network, the training point cloud data is processed by using a specified function to obtain a training graph structure, and then the training graph structure is used as an input of a to-be-trained first convolutional network.

In this way, the to-be-trained neural network may be trained based on the training dataset by using a back propagation algorithm, and the neural network is obtained through convergence of the to-be-trained neural network.

The neural network may be trained in a computer device that performs embodiments of this application, or may be transmitted to and deployed in the computer device after another device completes training.

The foregoing describes the object pickup method from a plurality of aspects in embodiments of this application. The following describes an object pickup apparatus 70 in this application with reference to FIG. 7. The object pickup apparatus 70 may be used in the foregoing computer device.

As shown in FIG. 7, the object pickup apparatus 70 may include:

an obtaining module 701, configured to obtain point cloud data about a target object;
a processing module 702, configured to obtain target pickup posture information and type information of the target object that are obtained by processing the point cloud data via a neural network, where the target pickup posture information is used for describing a target pickup posture of the pickup apparatus for the target object; and
a control module 703, configured to control, based on the target pickup posture information and the type information, the pickup apparatus to pick up the target object.

Optionally, the pickup apparatus includes a plurality of types of end effectors, and different types of end effectors are configured to pick up different types of objects.

The control module 703 is configured to:

determine a target pickup mode of the pickup apparatus based on the type information, where the target pickup mode indicates an end effector used for picking up the target object; and
control the pickup apparatus to pick up, in the target pickup mode, the target object based on the target pickup posture indicated by the target pickup posture information.

Optionally, the neural network includes a first convolutional network and a second convolutional network.

The processing module 702 is configured to:

obtain the target pickup posture information based on the point cloud data via the first convolutional network; and
obtain the type information of the target object based on the point cloud data via the second convolutional network.

Optionally, the processing module 702 is configured to:

obtain, from the point cloud data based on structure information of the end effector of the pickup apparatus, at least two sets of local point cloud data that match the end effector, where each set of local point cloud data corresponds to one candidate pickup posture; and
obtain the target pickup posture information based on the at least two sets of local point cloud data via the first convolutional network.

Optionally, the first convolutional network is a graph convolutional network.

The processing module 702 is configured to:

obtain a graph structure based on the at least two sets of local point cloud data, where each node in the graph structure corresponds to one piece of local point cloud data; and
process the graph structure via the first convolutional network, to obtain the target pickup posture information.

Optionally, the first convolutional network includes a first feature extraction network and a first classifier, and the first feature extraction network is located before the first classifier.

The processing module 702 is configured to:
obtain the type information of the target object via the second convolutional network based on the point cloud data and first feature information that is output by the first feature extraction network when the first convolutional network performs processing based on the point cloud data.

Optionally, the second convolutional network includes a second feature extraction network and a second classifier.

The processing module 702 is configured to:

process the point cloud data via the second feature extraction network, to obtain second feature information;
aggregate the first feature information and the second feature information, to obtain an aggregation result; and
process the aggregation result by using the second classifier, to obtain the type information of the target object.

FIG. 8 is a diagram of a possible logical structure of a computer device 80 according to an embodiment of this application. The computer device 80 is configured to implement functions of the computer device in any one of the foregoing embodiments. The computer device 80 includes a memory 801, a processor 802, a communication interface 803, and a bus 804. The memory 801, the processor 802, and the communication interface 803 are communicatively connected to each other through the bus 804.

The memory 801 may be a read-only memory (read-only memory, ROM), a static storage device, a dynamic storage device, or a random access memory (random access memory, RAM). The memory 801 may store a program. When the program stored in the memory 801 is executed by the processor 802, the processor 802 and the communication interface 803 are configured to perform steps 201 to 203 and the like in the foregoing object pickup method embodiment.

The processor 802 may be a central processing unit (central processing unit, CPU), a microprocessor, an application-specific integrated circuit (application-specific integrated circuit, ASIC), a graphics processing unit (graphics processing unit, GPU), a digital signal processor (digital signal processor, DSP), a field programmable gate array (field programmable gate array, FPGA) or another programmable logic device, a discrete gate or transistor logic device, a discrete hardware component, or any combination thereof, and the processor 802 is configured to execute a related program, to implement functions that need to be performed by the obtaining module, the processing module, the control module, and the like in the object pickup apparatus in the foregoing embodiments, or perform steps 201 to 203 and the like in the object pickup method embodiment in method embodiments of this application. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and performs steps 201 to 203 and the like in the foregoing object pickup method embodiment in combination with hardware of the processor 802.

The communication interface 803 uses a transceiver apparatus, for example, but not limited to a transceiver, to implement communication between the computer device 80 and another device or a communication network.

The bus 804 may implement a channel for communicating information between the components (for example, the memory 801, the processor 802, and the communication interface 803) of the computer device 80. The bus 804 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used for representing the bus in FIG. 8, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the steps performed by the processor in FIG. 8.

In another embodiment of this application, a computer program product is further provided. The computer program product includes computer-executable instructions, and the computer-executable instructions are stored in a computer-readable storage medium. When a processor of a device executes the computer-executable instructions, the device performs the steps performed by the processor in FIG. 8.

In another embodiment of this application, a chip system is further provided. The chip system includes a processor, and the processor is configured to implement the steps performed by the processor in FIG. 8. In a possible design, the chip system may further include a memory. The memory is configured to store program instructions and data that are necessary for the data writing apparatus. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in embodiments of this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling or direct coupling or communication connection may be an indirect coupling or communication connection through some interfaces, apparatuses or units, and may be in an electrical, mechanical, or other form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but are not intended to limit the protection scope of embodiments of this application.

## Claims

1. An object pickup method, comprising:

   Obtaining point cloud data about a target object;
   Obtaining target pickup posture information and type information of the target object that are obtained by processing the point cloud data via a neural network, wherein the target pickup posture information is used for describing a target pickup posture of a pickup apparatus for the target object; and
   Controlling, based on the target pickup posture information and the type information, the pickup apparatus to pick up the target object.

2. The method according to claim 1, wherein the pickup apparatus comprises a plurality of types of end effectors, and different types of end effectors are configured to pick up different types of objects; and
   the controlling, based on the target pickup posture information and the type information, the pickup apparatus to pick up the target object comprises:

   determining a target pickup mode of the pickup apparatus based on the type information, wherein the target pickup mode indicates an end effector used for picking up the target object; and
   controlling the pickup apparatus to pick up, in the target pickup mode, the target object based on the target pickup posture indicated by the target pickup posture information.

3. The method according to claim 1 or 2, wherein the neural network comprises a first convolutional network and a second convolutional network; and
   the obtaining target pickup posture information and type information of the target object that are obtained by processing the point cloud data via a neural network comprises:

   obtaining the target pickup posture information based on the point cloud data via the first convolutional network; and
   obtaining the type information of the target object based on the point cloud data via the second convolutional network.

4. The method according to claim 3, wherein the obtaining the target pickup posture information based on the point cloud data via the first convolutional network comprises:

   obtaining, from the point cloud data based on structure information of the end effector of the pickup apparatus, at least two sets of local point cloud data that match the end effector, wherein each set of local point cloud data corresponds to one candidate pickup posture; and

obtaining the target pickup posture information based on the at least two sets of local point cloud data via the first convolutional network.

**5.** The method according to claim 4, wherein the first convolutional network is a graph convolutional network; and the obtaining the target pickup posture information based on the at least two sets of local point cloud data via the first convolutional network comprises:

obtaining a graph structure based on the at least two sets of local point cloud data, wherein each node in the graph structure corresponds to one piece of local point cloud data; and
processing the graph structure via the first convolutional network, to obtain the target pickup posture information.

**6.** The method according to any one of claims 3 to 5, wherein the first convolutional network comprises a first feature extraction network and a first classifier, and the first feature extraction network is located before the first classifier; and the obtaining the type information of the target object based on the point cloud data via the second convolutional network comprises:
obtaining the type information of the target object via the second convolutional network based on the point cloud data and first feature information that is output by the first feature extraction network when the first convolutional network performs processing based on the point cloud data.

**7.** The method according to claim 6, wherein the second convolutional network comprises a second feature extraction network and a second classifier; and
the obtaining the type information of the target object via the second convolutional network based on the point cloud data and first feature information that is output by the first feature extraction network when the first convolutional network performs processing based on the point cloud data comprises:

processing the point cloud data via the second feature extraction network, to obtain second feature information;
aggregating the first feature information and the second feature information, to obtain an aggregation result; and
processing the aggregation result by using the second classifier, to obtain the type information of the target object.

**8.** An object pickup apparatus, comprising:

an obtaining module, configured to obtain point cloud data about a target object;
a processing module, configured to obtain target pickup posture information and type information of the target object that are obtained by processing the point cloud data via a neural network, wherein the target pickup posture information is used for describing a target pickup posture of the pickup apparatus for the target object; and
a control module, configured to control, based on the target pickup posture information and the type information, the pickup apparatus to pick up the target object.

**9.** The apparatus according to claim 8, wherein the pickup apparatus comprises a plurality of types of end effectors, and different types of end effectors are configured to pick up different types of objects; and
the control module is configured to:

determine a target pickup mode of the pickup apparatus based on the type information, wherein the target pickup mode indicates an end effector used for picking up the target object; and
control the pickup apparatus to pick up, in the target pickup mode, the target object based on the target pickup posture indicated by the target pickup posture information.

**10.** The apparatus according to claim 8 or 9, wherein the neural network comprises a first convolutional network and a second convolutional network; and
the processing module is configured to:

obtain the target pickup posture information based on the point cloud data via the first convolutional network; and
obtain the type information of the target object based on the point cloud data via the second convolutional network.

**11.** The apparatus according to claim 10, wherein the processing module is configured to:

obtain, from the point cloud data based on structure information of the end effector of the pickup apparatus, at least two sets of local point cloud data that match the end effector, wherein each set of local point cloud data corresponds to one candidate pickup posture; and
obtain the target pickup posture information based on the at least two sets of local point cloud data via the first convolutional network.

**12.** The apparatus according to claim 11, wherein the first convolutional network is a graph convolutional network; and the processing module is configured to:

obtain a graph structure based on the at least two sets of local point cloud data, wherein each node in the graph structure corresponds to one piece of local point cloud data; and
process the graph structure via the first convolutional network, to obtain the target pickup posture information.

**13.** The apparatus according to any one of claims 10 to 12, wherein the first convolutional network comprises a first feature extraction network and a first classifier, and the first feature extraction network is located before the first classifier; and the processing module is configured to:
obtain the type information of the target object via the second convolutional network based on the point cloud data and first feature information that is output by the first feature extraction network when the first convolutional network performs processing based on the point cloud data.

**14.** The apparatus according to claim 13, wherein the second convolutional network comprises a second feature extraction network and a second classifier; and
the processing module is configured to:

process the point cloud data via the second feature extraction network, to obtain second feature information;
aggregate the first feature information and the second feature information, to obtain an aggregation result; and
process the aggregation result by using the second classifier, to obtain the type information of the target object.

**15.** A computer device, wherein the computer device comprises at least one processor, a memory, and instructions that are stored in the memory and that can be executed by the at least one processor, and the at least one processor executes the instructions to implement steps of the method according to any one of claims 1 to 7.

**16.** A computer-readable storage medium, wherein the computer-readable storage medium stores a computer program, and when the computer program is executed by a processor, the method according to any one of claims 1 to 7 is implemented.

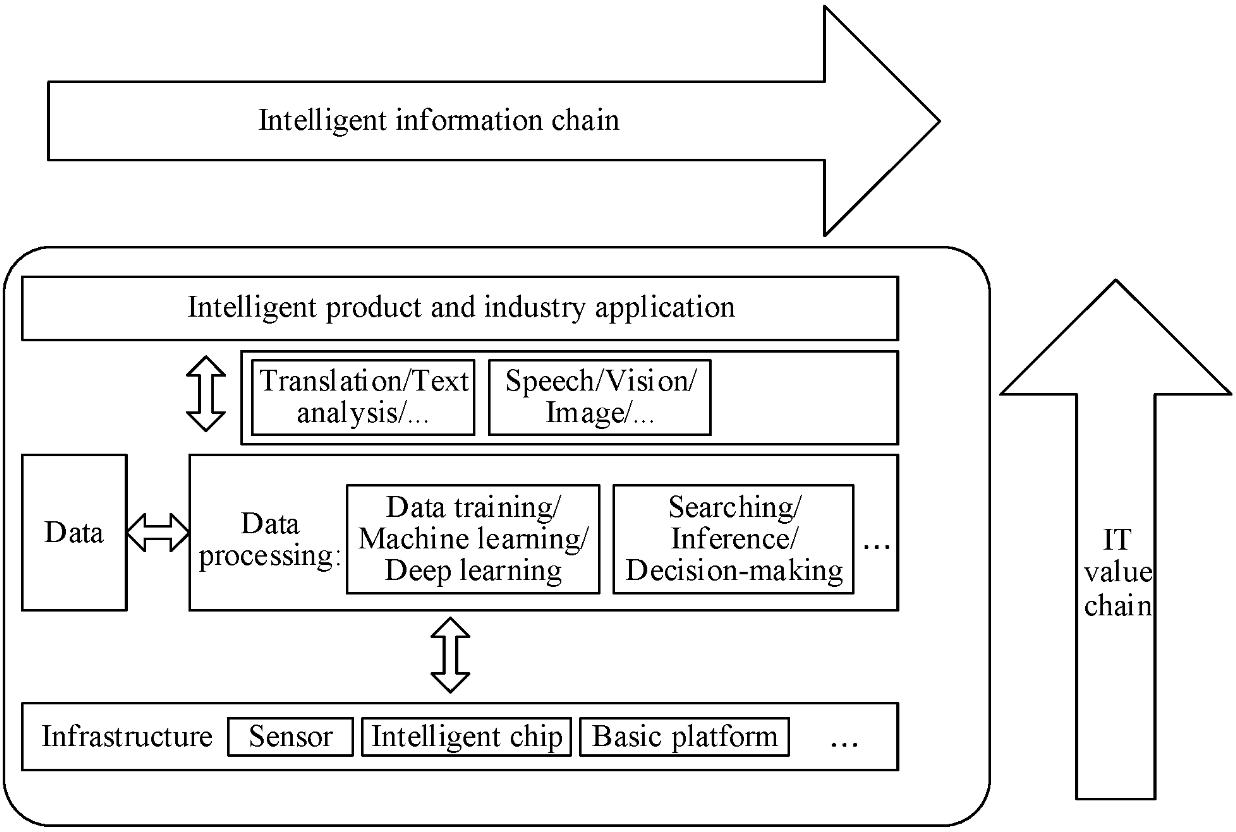
Intelligent information chain
Intelligent product and industry application
Translation/Text analysis/...
Speech/Vision/ Image/...
Data
Data processing:
Data training/ Machine learning/ Deep learning
Searching/ Inference/ Decision-making
...
Infrastructure
Sensor
Intelligent chip
Basic platform
...
IT value chain

FIG. 1

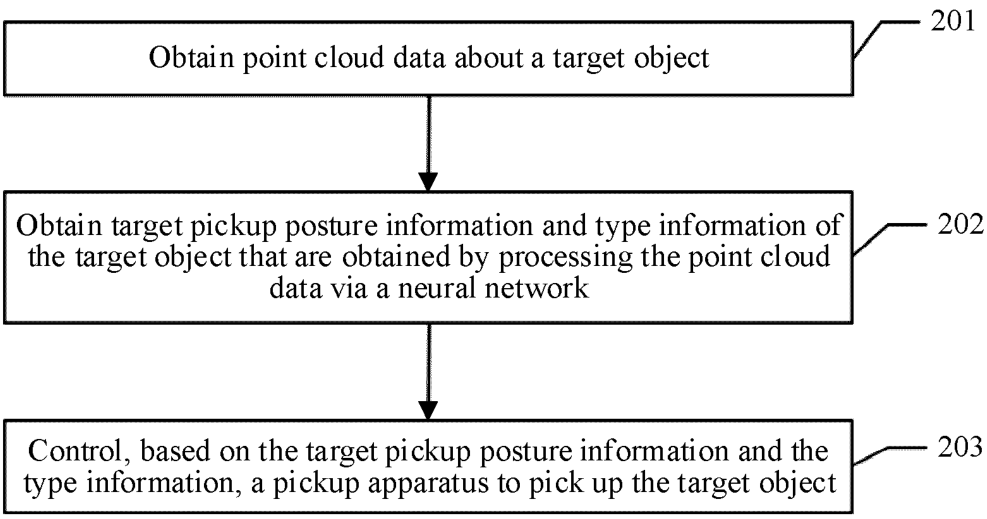
Obtain point cloud data about a target object
201
Obtain target pickup posture information and type information of the target object that are obtained by processing the point cloud data via a neural network
202
Control, based on the target pickup posture information and the type information, a pickup apparatus to pick up the target object
203

FIG. 2

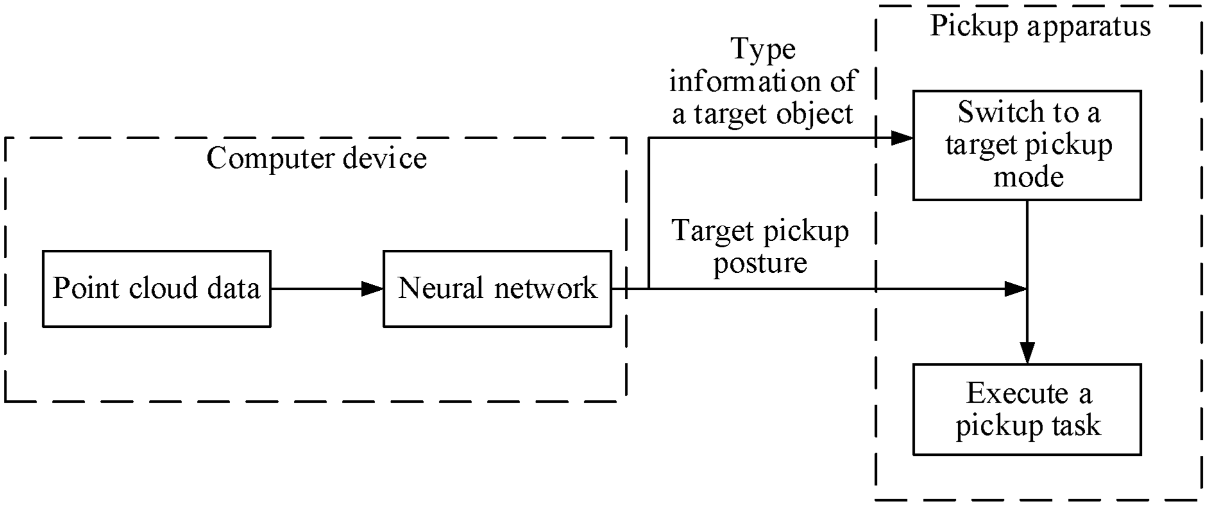
Pickup apparatus
Type information of a target object
Switch to a target pickup mode
Computer device
Target pickup posture
Point cloud data
Neural network
Execute a pickup task

FIG. 3

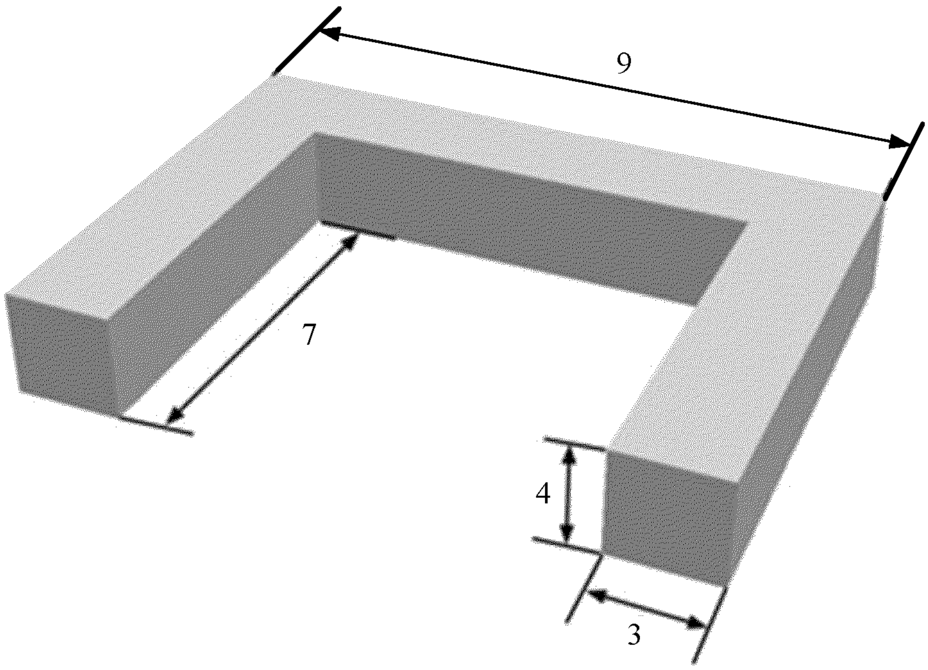
9
7
4
3

FIG. 4a

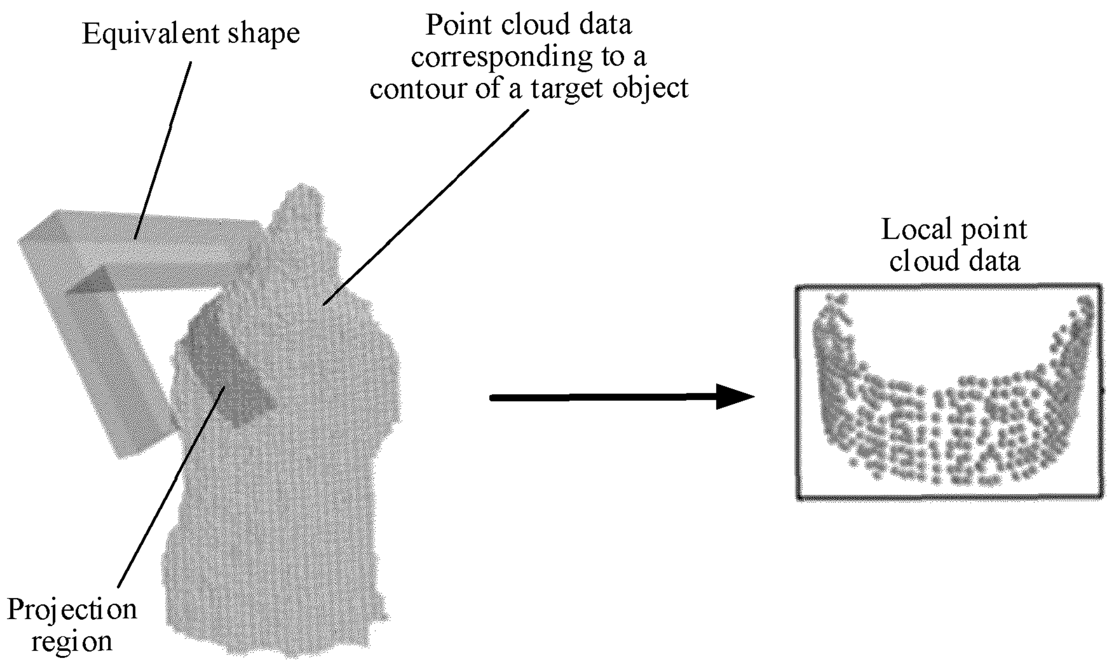
Equivalent shape
Point cloud data corresponding to a contour of a target object
Local point cloud data
Projection region

FIG. 4b

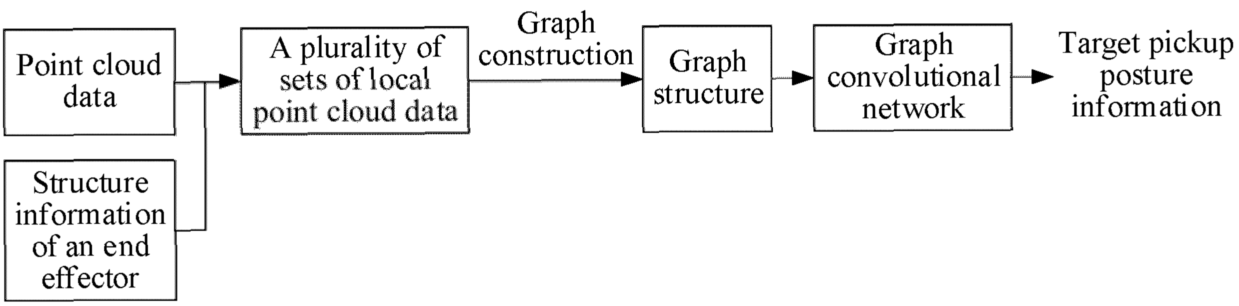
Point cloud data
Structure information of an end effector
A plurality of sets of local point cloud data
Graph construction
Graph structure
Graph convolutional network
Target pickup posture information

FIG. 5

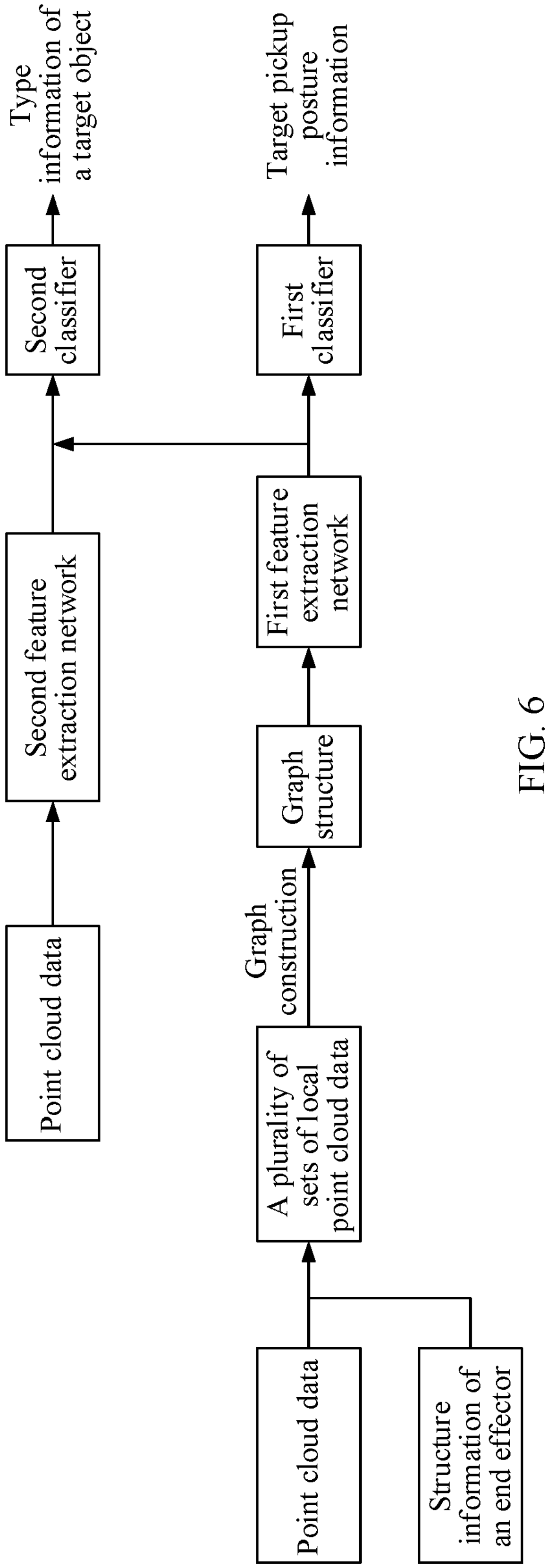
Point cloud data
Structure information of an end effector
A plurality of sets of local point cloud data
Graph construction
Graph structure
First feature extraction network
First classifier
Target pickup posture information
Point cloud data
Second feature extraction network
Second classifier
Type information of a target object

FIG. 6

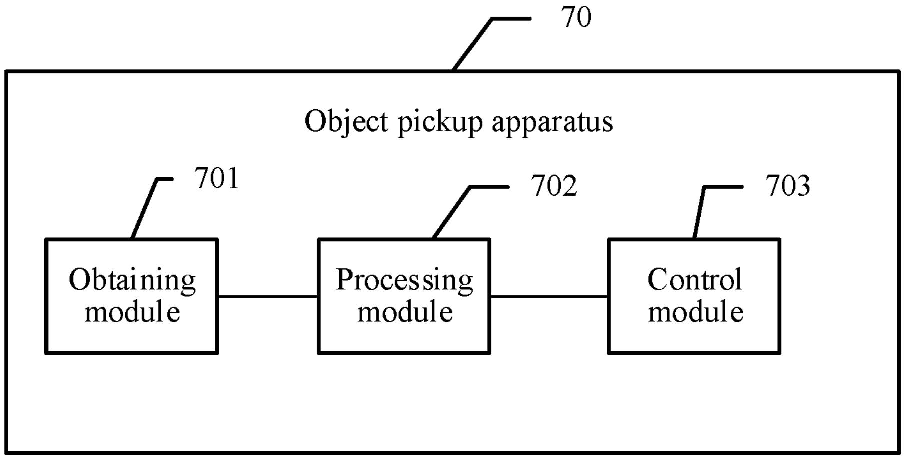
70
Object pickup apparatus
701
702
703
Obtaining module
Processing module
Control module

FIG. 7

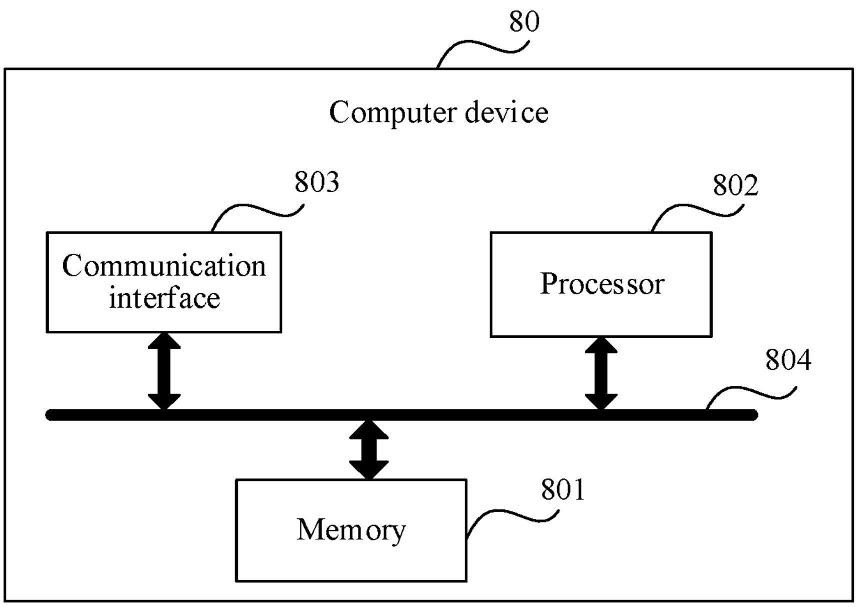
80
Computer device
803
802
Communication interface
Processor
804
801
Memory

FIG. 8

## INTERNATIONAL SEARCH REPORT

International application No.
**PCT/CN2023/091430**

**A. CLASSIFICATION OF SUBJECT MATTER**

B25J9/16(2006.01)i；B25J15/04(2006.01)i

According to International Patent Classification (IPC) or to both national classification and IPC

**B. FIELDS SEARCHED**

Minimum documentation searched (classification system followed by classification symbols)

IPC: B25J

Documentation searched other than minimum documentation to the extent that such documents are included in the fields searched

Electronic data base consulted during the international search (name of data base and, where practicable, search terms used)

CNTXT, ENTXT, DWPI, CNKI: 机器人, 机械手, 机械臂, 点云, 更换, 替换, 工件, 工具, 夹头, 类型, 执行器, 目标, 识别, 位姿, 姿态, 位置, robot?, manipulator?, arm, cloud, point, replac+, workpiece, tool?, type, effector?, target, posture, position

**C. DOCUMENTS CONSIDERED TO BE RELEVANT**

| Category* | Citation of document, with indication, where appropriate, of the relevant passages | Relevant to claim No. |
|---|---|---|
| Y | CN 111085997 A (TSINGHUA SHENZHEN INTERNATIONAL GRADUATE SCHOOL) 01 May 2020 (2020-05-01)<br>description, paragraphs 42-95, and figures 1-7 | 1-16 |
| Y | CN 112894377 A (LANGFANG YICHUANG TECHNOLOGY CO., LTD.) 04 June 2021 (2021-06-04)<br>description, paragraphs 32-48, and figures 1-13 | 1-16 |
| A | CN 110027005 A (BEIJING RAYIEE ZHITUO TECHNOLOGY DEVELOPMENT CO., LTD. et al.) 19 July 2019 (2019-07-19)<br>entire document | 1-16 |
| A | US 2018336690 A1 (FARO TECHNOLOGIES INC.) 22 November 2018 (2018-11-22)<br>entire document | 1-16 |
| A | US 2021086358 A1 (TOYOTA RESEARCH INSTITUTE, INC.) 25 March 2021 (2021-03-25)<br>entire document | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 May 2023** | **05 June 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/091430**

| Patent document cited in search report | | | Publication date (day/month/year) | Patent family member(s) | | | Publication date (day/month/year) |
|---|---|---|---|---|---|---|---|
| CN | 111085997 | A | 01 May 2020 | None | | | |
| CN | 112894377 | A | 04 June 2021 | None | | | |
| CN | 110027005 | A | 19 July 2019 | CN | 110027005 | B | 04 May 2021 |
| US | 2018336690 | A1 | 22 November 2018 | US | 10719947 | B2 | 21 July 2020 |
| | | | | JP | 2018194549 | A | 06 December 2018 |
| | | | | EP | 3407600 | A1 | 28 November 2018 |
| US | 2021086358 | A1 | 25 March 2021 | JP | 2021051737 | A | 01 April 2021 |
| | | | | US | 2022262109 | A1 | 18 August 2022 |
| | | | | US | 11348332 | B2 | 31 May 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210962888